# EUROPEAN PATENT APPLICATION

(11) **EP 3 324 559 A1**
(43) Date of publication of application: **23.05.2018**
(21) Application number: 17201043.1
(22) Date of filing: 10.11.2017
(51) Int. Cl.: H04B 10/2543, H04B 10/2557, H04B 10/50

(54) **OPTICAL TRANSMISSION METHOD, OPTICAL TRANSMISSION APPARATUS, AND OPTICAL TRANSMISSION SYSTEM**

(30) Priority: 17.11.2016 JP 2016224052
(71) Applicant: FUJITSU LIMITED, Kanagawa 211-8588 (JP)
(72) Inventor: Irie, Hiroyuki, Kanagawa 211-8588 (JP)
(74) Representative: Hoffmann Eitle

(57) **Abstract**

An optical transmission method executed by a processor included in an optical transmission apparatus, the optical transmission method includes outputting, by using a first polarized wave, a first frame with a first fixed pattern representing a given arrangement of binary numbers for establishing synchronization; outputting, by using a second polarized wave orthogonal to the first polarized wave, a second frame with a second fixed pattern in which at least part of the first fixed pattern is reversed; multiplexing the first polarized wave and the second polarized wave to generate an optical signal; and transmitting the generated optical signal.

## Description

### FIELD

The embodiment discussed herein is related to an optical transmission method, an optical transmission apparatus, and an optical transmission system.

### BACKGROUND

In the field of optical communications, with the growing demand for a large-capacity optical communication network, there has recently become known a technology that performs optical transmission by using a coherent polarization-multiplexed phase-modulated optical signal, which is obtained by assigning phase-modulated signals separately to two orthogonal polarization components to achieve multiplexing.

For some of the coherent polarization-multiplexed phase-modulated optical signals (hereinafter also referred to as multiplexed signals), in order for a receiver for receiving a multiplexed signal to detect the head of a frame of the multiplexed signal and to perform dispersion estimation, a fixed pattern area is provided in a given portion of the header of the frame. A multiplexed signal, which is assumed to travel in the Z-direction, is composed of a wave polarized in the X-direction and a wave polarized in the Y-direction. The phase of a polarized wave corresponds to values, denoted by a zero or a one or a combination thereof, in a frame (see, for example, International Publication Pamphlet No. WO 2010/134321).

In, for example, the payload portions of frames, respective pieces of data corresponding to the phase of a wave polarized in the X-direction and to the phase of a wave polarized in the Y-direction are independent of each other. However, in the fixed pattern areas, these pieces of data are equal to each other in some cases, ensuring detection of the heads of the frames and the dispersion estimation sensitivity on the receiving side.
Setting the fixed pattern area to a certain length or more, for example, 10 ns (nanosecond) ensures detection of the head of the frame and the dispersion estimation sensitivity on the receiver side even when disturbance or noise has occurred in a signal on an optical transmission path. As related art, for example, Brandon C. Collings, and Luc Boivin, "Nonlinear Polarization Evolution Induced by Cross-Phase Modulation and Its Impact on Transmission Systems", IEEE PHOTONICS TECHNOLOGY LETTERS, VOL. 12, NO. 11, NOVEMBER 2000 and so on are disclosed.

### SUMMARY

### [TECHNICAL PROBLEM]

However, on an optical transmission path along which a plurality of signals with wavelengths that are different from one another are multiplexed and transmitted, cross-polarization modulation (also abbreviated as XpolM) sometimes occurs because of nonlinear optical effects resulting from a change in the state of polarization, such as the orientation of polarization, of a signal. In some cases such as the case where the chromatic dispersion of a plurality of signals on an optical transmission path is small and the case where dispersion compensation is performed on an optical transmission path, XpolM that has occurred from a signal portion in the fixed pattern area causes a polarization fluctuation of a signal having a different wavelength.

In a signal where a polarization fluctuation induced by XpolM (the signal is also referred to as a disturbed signal), a burst error occurs during the polarization fluctuation. When the burst error that has occurred exceeds the level of burst error immunity of forward error correction (FEC), an error occurs even after the processing of FEC. In view of the above, it is desirable to be able to reduce the polarization fluctuation of a disturbed signal and, in turn, to reduce burst errors.

In view of the foregoing, it is an object of the disclosure is to provide an optical transmission method, an optical transmission apparatus, and an optical transmission system that are capable of reducing the polarization fluctuation of a disturbed signal and, in turn, reducing burst errors.

### [SOLUTION TO PROBLEM]

According to an aspect of the invention, an optical transmission method executed by a processor included in an optical transmission apparatus, the optical transmission method includes outputting, by using a first polarized wave, a first frame with a first fixed pattern representing a given arrangement of binary numbers for establishing synchronization; outputting, by using a second polarized wave orthogonal to the first polarized wave, a second frame with a second fixed pattern in which at least part of the first fixed pattern is reversed; multiplexing the first polarized wave and the second polarized wave to generate an optical signal; and transmitting the generated optical signal.

### [ADVANTAGEOUS EFFECTS OF INVENTION]

In an aspect, it is possible to reduce the polarization fluctuation of a disturbed signal and, in turn, to reduce burst errors.

### BRIEF DESCRIPTION OF DRAWINGS

FIG. 1 is a diagram illustrating an example of influence of a fixed pattern area of an adjacent signal on the payload of a disturbed signal;
FIG. 2 is a diagram illustrating distribution of parameters of polarized waves;
FIG. 3 is a diagram illustrating an example of a polarization fluctuation;
FIG. 4 is a diagram illustrating a polarization fluctuation occurring when the phase of a wave polarized in the Y-direction is reversed;
FIG. 5 is a diagram illustrating a condition for cancelling the influence of disturbance, according to an example of the present embodiment;
FIG. 6 is a diagram illustrating an optical transmission system according to an example of the present embodiment;
FIG. 7 is a functional block diagram of a transmitter according to an example of the present embodiment;
FIG. 8 is a diagram illustrating an example of a fixed pattern according to the present embodiment;
FIG. 9 is a diagram illustrating examples of fixed patterns;
FIG. 10 is a functional block diagram of a receiver according to an example of the present embodiment; and
FIG. 11 is a diagram illustrating an example of a hardware configuration according to the present embodiment.

### DESCRIPTION OF EMBODIMENTS

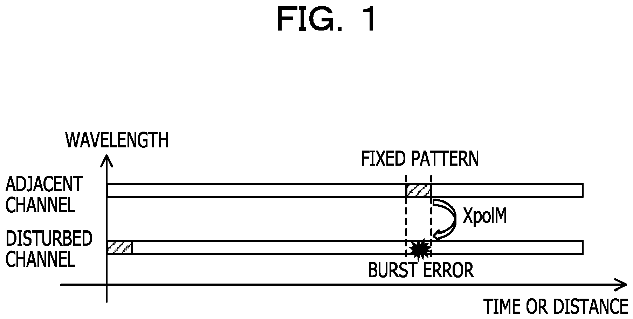

With reference to FIG. 1, in the case where two signals (signals are also referred to as signal waves) in wavelength bands (also referred to as channels) adjacent to each other are transmitted over a single optical transmission path, the influence of one signal (referred to as an adjacent signal) on the other signal (referred to as a disturbed signal) will be described. In the description hereinafter, the channel of an adjacent signal is referred to as an adjacent channel. The channel of a disturbed signal is referred to as a disturbed channel.

The two signals travel in the Z-direction in XYZ-space. Initially, in the fixed pattern area of the adjacent signal, the signal is composed of a wave linearly polarized in the X-direction and a wave linearly polarized in the Y-direction. The wave linearly polarized in the X-direction and the wave linearly polarized in the Y-direction are equal to each other in terms of amplitude and phase. At this point, the direction of the linearly polarized wave of the fixed pattern area of the adjacent signal is oriented 45 degrees from the X-axis in the XY-plane. At this point, the Stokes parameters of the adjacent signal are such that S_{A}1 = 0, S_{A}2 = 1, and S_{A}3 = 0. This subscript A is intended to indicate the Stokes parameters of the adjacent signal.

Here, the Stokes parameters will be plainly described. A signal wave, composed of a wave polarized in the X-direction and a wave polarized in the Y-direction, that propagates in the Z-direction is supposed here. At this point, when the amplitude of the wave polarized in the X-direction of this signal wave is Ax and the phase thereof is δx, and the amplitude of the wave polarized in the Y-direction is Ay and the phase thereof is δy, the wave polarized in the X-direction Dx and the wave polarized in the Y-direction Dy are expressed as follows: Dx = Ax · cos(ωt - k · r + δx) and Dy = Ay · cos(ωt - k · r + δy). At this point, the Stokes parameters are defined as follows: S1 = Ax² - Ay², S2 = 2Ax · Ay · cosδ, and S3 = 2Ax · Ay · sinδ, where δ = δy - δx.

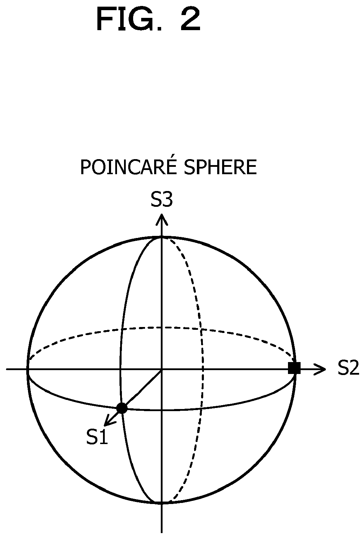

In the space defined by an S1 axis, an S2 axis, and an S3 axis perpendicular to each other, illustrated in FIG. 2, the Stokes parameters mentioned above have the respective values on the Poincaré sphere. Here, the Stokes vector S is given as S = (S1, S2, S3).

Assuming that the disturbed signal has a wave linearly polarized in the X-direction, the Stokes parameters are such that S_{B}1 = 1, S_{B}2 = 0, and S_{B}3 = 0. This subscript B attached to Stokes parameters is intended to indicate that the Stokes parameters are those of the disturbed signal.

According to conventional technologies, polarized waves Sα and Sβ of two arbitrary signals are subjected to XpolM to change in accordance with the following equation: ∂Sα / ∂Z = Sα × Sβ where × denotes the cross product.

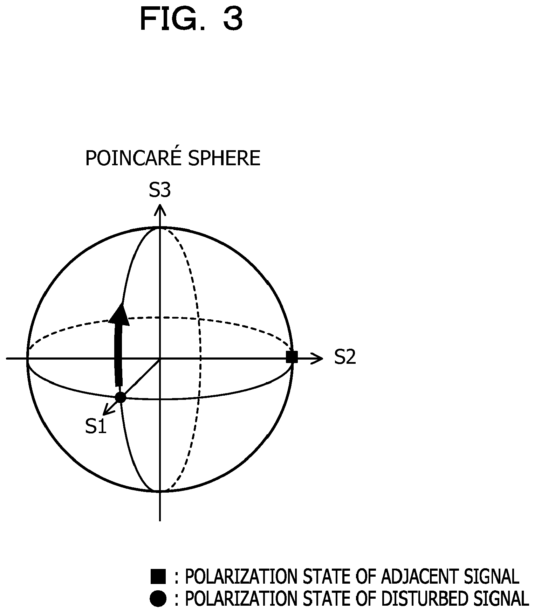

Applying this to the present embodiment, ∂S_{B}1 / ∂Z = S_{B}1 × S_{A}2. From this, as illustrated in FIG. 3, it may be seen that as the disturbed signal travels in the Z-direction, S_{B}1 is fluctuated in the positive S3 direction under the influence of the S_{A}2 component of the adjacent signal. This fluctuation corresponds to a change from the wave linearly polarized in the X-direction of the disturbed signal to the right-handed elliptically polarized wave. Thus, a burst error occurs in the disturbed signal as illustrated in FIG. 1.

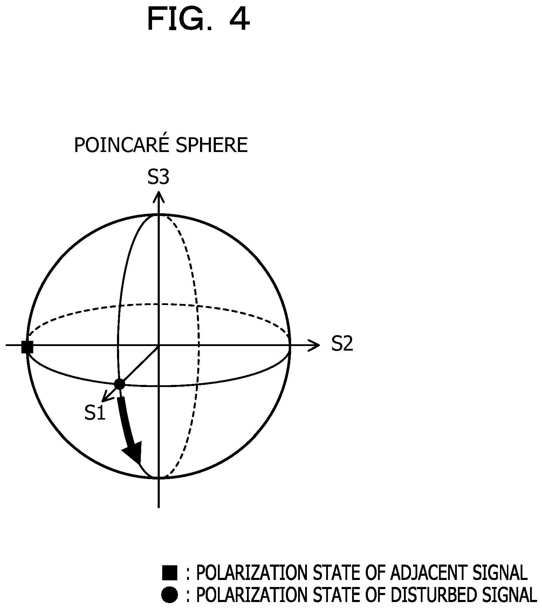

Here, the case of reversing the phase of a wave linearly polarized in the Y-direction in the fixed pattern area of the adjacent signal is considered. At this point, according to the equation described above, the wave polarized in the Y-direction of the adjacent signal changes from Dy = Ay · cos(ωt - k · r + δy) to Dy = Ay · cos(ωt - k · r + δy + π). Along with this change, the polarized wave obtained by synthesizing the wave polarized in the X-direction and the wave polarized in the Y-direction is a linearly polarized wave oriented -45 degrees from the X-axis in the XY-plane. In this case, the Stokes parameters are such that S1 = 0, S2 = -1, and S3 = 0. At this point, as illustrated in FIG. 4, it may be seen that the S_{B}1 described above is fluctuated in the negative S3 direction.

From this, in an example of the present embodiment, in order to cancel the fluctuation of S_{B}1 in either the positive or the negative S3 direction, a fluctuation in a direction opposite to this fluctuation is periodically given to S_{B}1.

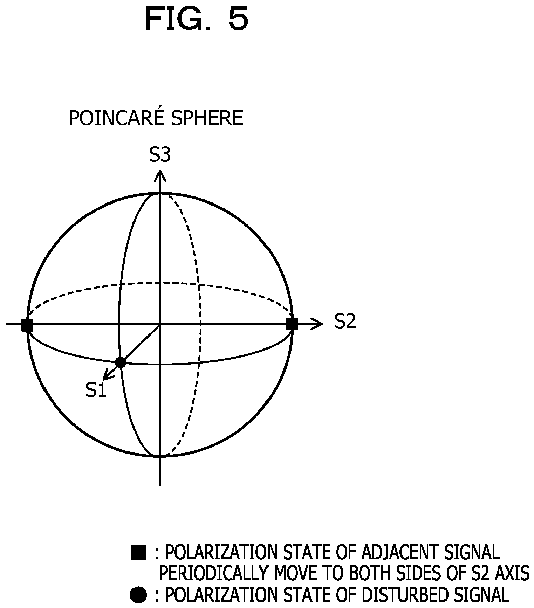

In an example of the present embodiment, the wave linearly polarized in the Y-direction of the adjacent signal in the fixed pattern area is reversed in every fixed period. For example, as illustrated in FIG. 5, S_{A}2 of the adjacent signal indicated by a square moves periodically and alternately between 1 and -1 on both sides of the S2 axis on the Poincaré sphere. That is, the Stokes parameters of the adjacent signal are periodically either in the state of S1 = 0, S2 = 1, and S3 = 0 or in the state of S1 = 0, S2 = -1, and S3 = 0. Setting this period to be less than or equal to the time for a response to XpolM cancels out a change of S_{B}1 in the positive or negative S3 direction. As a result, the influence of the fixed pattern of the adjacent signal on the disturbed signal may be reduced.

To achieve this, the following process is performed in an optical transmission apparatus according to an example of the present embodiment. A certain arbitrary fixed pattern is referred to as a fist fixed pattern. In an example of the present embodiment, a frame that corresponds to a wave linearly polarized in the X-direction and whose header part includes a certain arbitrary fixed pattern as the first fixed pattern is referred to as a first frame. Next, a pattern in which part of the first fixed pattern or the first fixed pattern is reversed in each fixed period is referred to as a second fixed pattern. Further, a frame whose header includes this second fixed pattern and that corresponds to a wave linearly polarized in the Y-direction is referred to as a second frame. The optical transmission apparatus according to an example of the present embodiment multiplexes an optical signal (referred to as a first polarized wave) generated based on the first frame and an optical signal (referred to as a second polarized wave) generated based on the second frame and transmits the resultant signal.

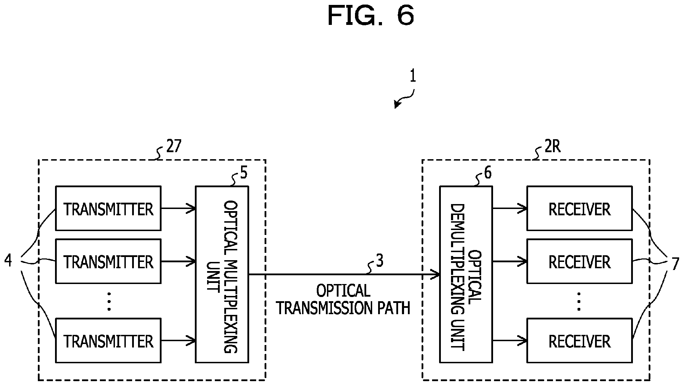

FIG. 6 illustrates a functional block diagram of an optical transmission system 1 according to an example of the present embodiment. The optical transmission system 1 includes an optical transmission apparatus 2T on the transmitting side, an optical transmission apparatus 2R on the receiving side, and an optical transmission path 3. The optical transmission apparatus 2T on the transmitting side and the optical transmission apparatus 2R on the receiving side transmit and receive optical signals via the optical transmission path 3, respectively.

The optical transmission apparatus 2T includes a single or a plurality of transmitters 4 and an optical multiplexing unit 5.

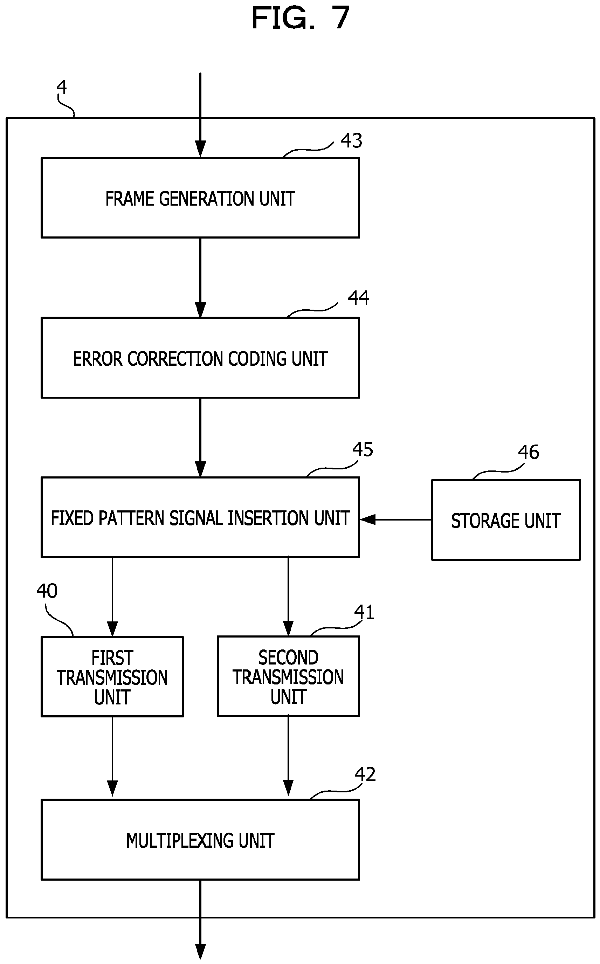

Here, with reference to FIG. 7, each transmitter 4 will be described in detail. Each transmitter 4 includes a first transmission unit 40, a second transmission unit 41, and a multiplexing unit 42. Each transmitter 4 includes a frame generation unit 43, an error correction coding unit 44, a fixed pattern signal insertion unit 45, and a storage unit 46.

The storage unit 46 is included in the transmitter 4 in an example of the present embodiment. However, the storage unit 46 may be provided outside the transmitter 4.

The process described hereinafter, which passes through the stage of each functional block illustrated in FIG. 7, is performed in each transmitter 4.

The frame generation unit 43 generates optical transport network (OTN) frames or the like and outputs the generated frames or the like to the error correction coding unit 44. The error correction coding unit 44 provides the frames input from the frame generation unit 43 with, for example, error correction codes such as FEC codes, and outputs these frames to the fixed pattern signal insertion unit 45.

In order to insert fixed patterns into the frames input from the error correction coding unit 44, the fixed pattern signal insertion unit 45 reads a first fixed pattern and a second fixed pattern from the storage unit 46, such as a read only memory (ROM). In this case, the storage unit 46 stores therein in advance the first fixed pattern and the second fixed pattern. However, when the storage unit 46 stores therein in advance the first fixed pattern, the fixed pattern signal insertion unit 45 may read the first fixed pattern from the storage unit 46 and produce the second fixed pattern from the first fixed pattern by reversing part of the first fixed pattern. The optimum reversal period is dependent on parameters of transmission and a transmission path, and therefore is set to be variable in accordance with the parameters.

The fixed pattern signal insertion unit 45 inserts the first fixed pattern into the frame corresponding to the wave linearly polarized in the X-direction input from the error correction coding unit 44, so that the first frame is generated. The fixed pattern signal insertion unit 45 inserts the second fixed pattern into the frame corresponding to the wave linearly polarized in the Y-direction input from the error correction coding unit 44, so that the second frame is generated.

The fixed pattern signal insertion unit 45 outputs the first frame and the second frame generated in such a manner as mentioned above to the first transmission unit 40 and the second transmission unit 41, respectively.

The first transmission unit 40 generates a first polarized wave based on the first frame and outputs the generated first polarized wave to the multiplexing unit 42. The second transmission unit 41 generates a second polarized wave based on the second frame and outputs the generated second polarized wave to the multiplexing unit 42. The multiplexing unit 42 outputs a signal obtained by multiplexing the first polarized wave and the second polarized wave to the optical multiplexing unit 5.

The optical multiplexing unit 5 multiplexes optical signals input from the transmitters 4 and provides the output to the optical transmission path 3.

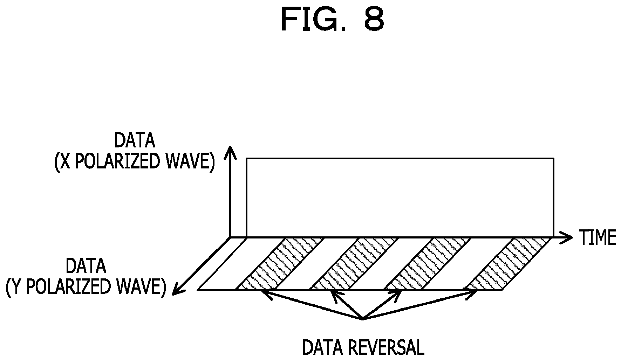

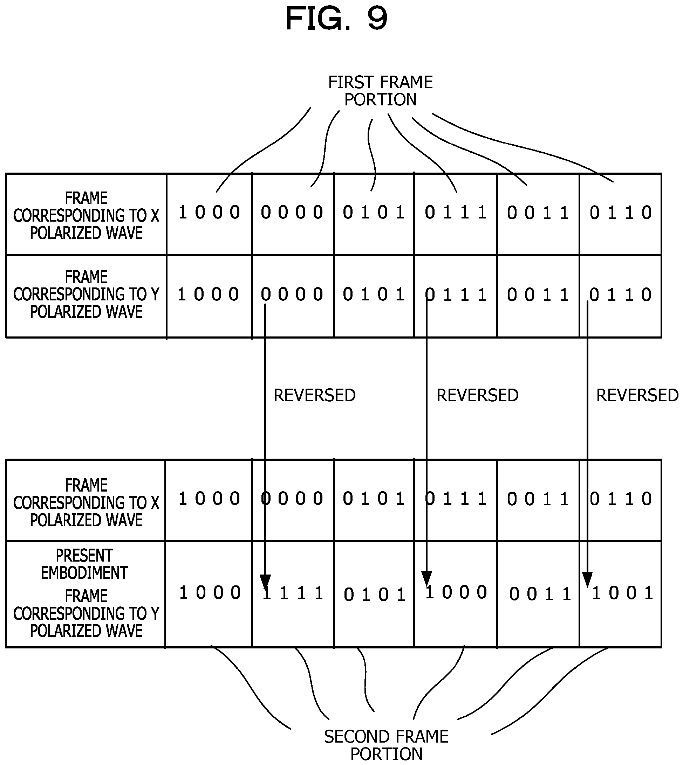

Examples of the first fixed pattern and the second fixed pattern that are inserted by the fixed pattern signal insertion unit 45 will be described with reference to FIG. 8 and FIG. 9. Illustrated in FIG. 8 is an example of representation of periodic reversal applied to the first fixed pattern, the periodic reversal corresponding to a periodic change in the Stokes parameters of the adjacent signal on the Poincaré sphere described above. In this example, reversal of data is applied to the first fixed pattern for every several to several tens of symbols. Here, portions where hatching is applied are reversed portions. FIG. 9 is an example of a more detailed illustration of the periodic reversal of the fixed pattern illustrated in FIG. 8. Illustrated in an upper portion and a lower portion of FIG. 9 are specific examples of frames of fixed patterns, the frames corresponding to a wave linearly polarized in the X-direction and a wave linearly polarized in the Y-direction. Illustrated in the upper portion of FIG. 9 is an example where reversal is not applied to the frame corresponding to the wave linearly polarized in the Y-direction. Illustrated in the lower portion is an example where reversal is periodically applied to the frame corresponding to the wave linearly polarized in the Y-direction. In an example of the present embodiment, the fixed pattern signal insertion unit 45 acquires the fixed patterns illustrated in the lower portion of FIG. 9.

In the example illustrated in the lower portion of FIG. 9, reversal is applied to the frame of the fixed pattern, which corresponds to the wave linearly polarized in the Y-direction, at intervals of four bits. In the first row, the frame of the fixed pattern, which corresponds to the wave linearly polarized in the X-direction, is given. In the second row, the frame corresponding to the wave linearly polarized in the Y-direction is given. The frame in the upper portion that corresponds to the wave linearly polarized in the X-direction and to which reversal is not applied is compared with the frame in the lower portion that corresponds to the wave linearly polarized in the Y-direction and to which reversal is applied. This comparison reveals that the values of lower four bits are reversed in the frame of the lower portion. The respective values of the lower fifth to eighth bits of the frames corresponding to the waves linearly polarized in the Y-direction in the upper portion and in the lower portion are equal to each other. The respective values of the lower ninth to 12th bits of the frame corresponding to the wave linearly polarized in the Y-direction in the lower portion are reversed from the respective values of the lower ninth to 12th bits of the frame corresponding to the wave linearly polarized in the Y-direction in the upper portion. The respective values of the lower 13th to 16th bits of the frames corresponding to the waves linearly polarized in the Y-direction in the upper portion and in the lower portion are equal to each other. The respective values of the lower 17th to 20th bits of the frame corresponding to the wave linearly polarized in the Y-direction in the lower portion are reversed from the respective values of the lower 17th to 20th bits of the frame corresponding to the wave linearly polarized in the Y-direction in the upper portion. The respective values of the lower 21st to 24th bits of the frames corresponding to the waves polarized in the Y-direction in the upper portion and in the lower portion are equal to each other.

With reference back to FIG. 6, the optical transmission apparatus 2R includes an optical demultiplexing unit 6 and a single or a plurality of receivers 7. The optical demultiplexing unit 6 demultiplexes a multiplexed optical signal received via the optical transmission path 3 from the optical transmission apparatus 2T and provides the output to the receivers 7 designated as the transmission destinations.

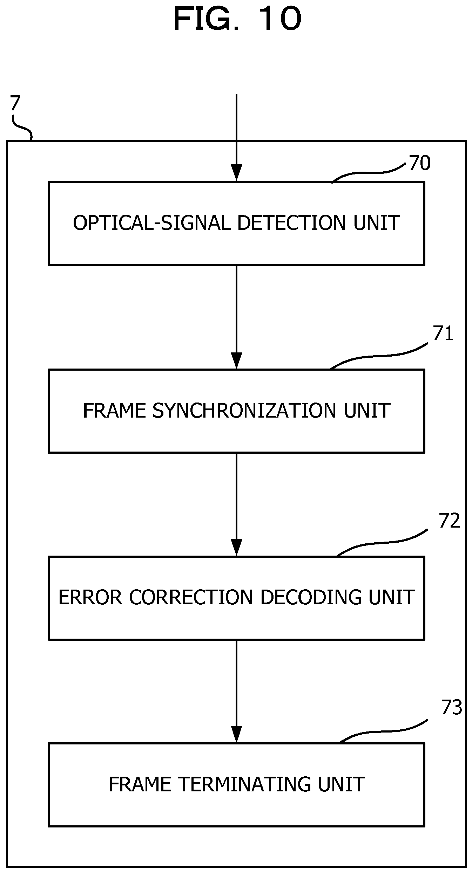

With reference to FIG. 10, each receiver 7 will be described in detail. Each receiver 7 includes an optical-signal detection unit 70, a frame synchronization unit 71, an error correction decoding unit 72, and a frame terminating unit 73. The process described hereinafter, which passes through the stage of each functional block illustrated in FIG. 10, is performed in each receiver 7.

The optical-signal detection unit 70 detects an optical signal input from the optical demultiplexing unit 6 and outputs the detected optical signal to the frame synchronization unit 71. The frame synchronization unit 71 detects fixed patterns by a method according to a conventional technology. At this occasion, the frame synchronization unit 71 detects the first fixed pattern and the second fixed pattern. The frame synchronization unit 71 uses the detected fixed patterns to establish synchronization between frames. Then, the frame synchronization unit 71 outputs the frames between which synchronization has been established to the error correction decoding unit 72. The error correction decoding unit 72 corrects errors in the frames based on codes provided by the error correction coding unit 44 of the transmitter 4, and then outputs the frames to the frame terminating unit 73. The frame terminating unit 73 terminates the input frames.

The receiver 7 according to an example of the present embodiment is capable of establishing synchronization between the frames by using the first fixed pattern and the second fixed pattern. Using the fixed patterns according to an example of the present embodiment in such a manner enables optical transmission apparatuses to transmit and receive a plurality of signals while reducing disturbance from another signal. Further, it is possible to perform detection of a signal and establishment of synchronization between frames (for example, referred to as coherent detection).

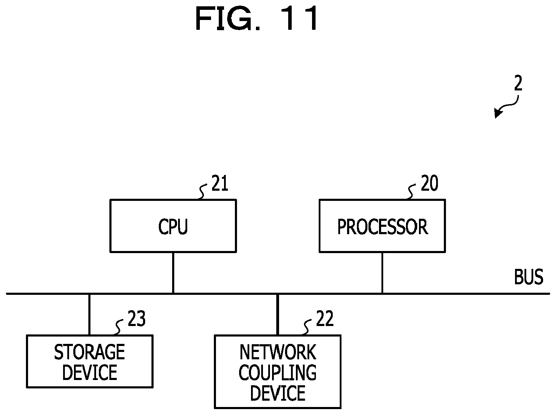

Illustrated in FIG. 11 is an example of a hardware configuration of each of the optical transmission apparatus 2T and the optical transmission apparatus 2R according to an example of the present embodiment. These apparatuses are generically referred to as optical transmission apparatuses 2.

The optical transmission apparatus 2 includes a processor 20, a memory 21, a network coupling device 22, and a storage device 23, and these components are coupled to one another by a bus.

The processor 20 is, for example, a single-core processor, a multicore processor, or a dual-core processor.

The memory 21 is, for example, a read only memory (ROM), a random access memory (RAM), or a semiconductor memory.

The processor 20 reads various programs from the memory 21. The processor 20 achieves the functions of the frame generation unit 43, the error correction coding unit 44, and the fixed pattern signal insertion unit 45 described above, or the functions of the frame synchronization unit 71, the error correction decoding unit 72, and the frame terminating unit 73.

The network coupling device 22 is a communication interface, coupled to an optical transmission path, for converting a frame, which is processed by the processor 20, to an optical signal that is transmissible over an optical transmission path or for converting an optical signal from an optical transmission path to a frame. The functions performed by the first transmission unit 40, the second transmission unit 41, the multiplexing unit 42, and the optical multiplexing unit 5 described above or the functions performed by the optical demultiplexing unit 6 and the optical-signal detection unit 70 described above are achieved by the network coupling device 22.

The storage device 23 stores therein the first fixed pattern and the second fixed pattern. The processor 20 reads the first fixed pattern and the second fixed pattern from the storage device 23 and writes these patterns to the memory 21, thereby achieving the function as the fixed pattern signal insertion unit 45. Thereby, the storage device 23 achieves the function of the storage unit 46. The storage device 23 is, for example, a ROM. The storage device 23 may be a portable storage medium. The first fixed pattern and the second fixed pattern may be stored in the memory 21.
As described above, the optical transmission apparatus 2 according to an example of the present embodiment has the first fixed pattern and the second fixed pattern in which the first fixed pattern is periodically reversed. This reversal corresponds to periodically changing the coordinates of the Stokes parameters of an adjacent signal on the Poincaré sphere. Further, the optical transmission apparatus 2 generates the first polarized wave and the second polarized wave by using the first fixed pattern and the second fixed pattern, respectively, and transmits an adjacent signal obtained by multiplexing these waves. Thus, periodic changes of the Stokes parameters, for example, the S2 component, of the adjacent signal may be coped with, and disturbance in the wave linearly polarized in the X-direction of the disturbed signal caused by XpolM or the like may be cancelled out. Further, thus, a burst error may be inhibited from occurring, and errors after FEC on the receiving side may be reduced.

## Claims

1. An optical transmission method executed by an optical transmission apparatus, the optical transmission method comprising:
outputting, by using a first polarized wave, a first frame with a first fixed pattern representing a given arrangement of binary numbers for establishing synchronization;
outputting, by using a second polarized wave orthogonal to the first polarized wave, a second frame with a second fixed pattern in which at least part of the first fixed pattern is reversed;
multiplexing the first polarized wave and the second polarized wave to generate an optical signal; and
transmitting the generated optical signal.

2. The optical transmission method according to claim 1,
wherein, in the second fixed pattern, at least part of the first fixed pattern is periodically reversed.

3. The optical transmission method according to claim 2, wherein the reversal period is variable.

4. The optical transmission method according to any of claims 1 to 3, further comprising:
reading the first fixed pattern and the second fixed pattern from a memory;
generating the first frame using the first fixed pattern; and
generating the second frame using the second fixed pattern.

5. The optical transmission method according to any of claims 1 to 3, further comprising:
reading out the first fixed pattern from a memory;
producing, using the first fixed pattern, the second fixed pattern in which at least part of the first fixed pattern is reversed;
generating, using the first fixed pattern, the first frame; and
generating, using the second fixed pattern, the second frame.

6. The optical transmission method according to any of claims 1 to 3, wherein the memory is a read only memory (ROM).

7. The optical transmission method according to any of claims 1 to 3, wherein the first polarized wave and the second polarized wave are equal to each other in terms of amplitude and phase.

8. An optical transmission apparatus comprising:
a first transmitting unit configured to output, by using a first polarized wave, a first frame with a first fixed pattern representing a given arrangement of binary numbers for establishing synchronization,
a second transmitting unit configured to output, by using a second polarized wave orthogonal to the first polarized wave, a second frame with a second fixed pattern in which at least part of the first fixed pattern is reversed,
a multiplexing unit configured to multiplex the first polarized wave and the second polarized wave to generate an optical signal, and transmit the generated optical signal.

9. An optical transmission system comprising:
a first optical transmission apparatus including:
a first transmitting unit configured to transmit, by using a first polarized wave, a first frame with a first fixed pattern representing a given arrangement of binary numbers for establishing synchronization,
a second transmitting unit configured to transmit, by using a second polarized wave orthogonal to the first polarized wave, a second frame with a second fixed pattern in which at least part of the first fixed pattern is reversed, and
a multiplexing unit configured to multiplex the first polarized wave and the second polarized wave to generate an optical signal and to transmit the generated optical signal; and
a second optical transmission apparatus including:
an optical signal detection unit configured to receive the optical signal and to detect the first fixed pattern and the second fixed pattern from the received optical signal, and
a frame synchronization unit configured to generate, using the first fixed pattern and the second fixed pattern, frames between which synchronization is established.

10. The optical transmission system according to claim 9,
wherein, in the second fixed pattern, at least part of the first fixed pattern is periodically reversed.

11. The optical transmission system according to claim 10, wherein the reversal period is variable.

12. The optical transmission system according to any of claims 9 to 11, wherein the first optical transmission apparatus includes
a fixed pattern signal insertion unit configured to:
read out the first fixed pattern and the second fixed pattern from a memory,
generate the first frame using the first fixed pattern, and
generate the second frame using the second fixed pattern.

13. The optical transmission system according to any of claims 9 to 11, wherein the first optical transmission apparatus includes
a fixed pattern signal insertion unit configured to:
read out the first fixed pattern from a memory, produce, using the first fixed pattern, the second fixed pattern in which at least part of the first fixed pattern is reversed,
generate the first frame using the first fixed pattern, and
generate the second frame using the second fixed pattern.

14. The optical transmission method according to any of claims 12 to 13, wherein the memory is a read only memory (ROM).
